**Europäisches Patentamt**

(19) **European Patent Office**

**Office européen des brevets**

(11) Veröffentlichungsnummer: **0 013 332**

**A1**

(12) # EUROPÄISCHE PATENTANMELDUNG

(21) Anmeldenummer: **79104825.9**

(22) Anmeldetag: **01.12.79**

(51) Int. Cl.³: **H 02 M 3/335**
**H 02 M 7/757, H 02 P 13/18**
**H 04 M 19/02, H 04 Q 1/30**

(30) Priorität: **16.01.79 CH 392/79**

(43) Veröffentlichungstag der Anmeldung:
**23.07.80 Patentblatt 80/15**

(84) Benannte Vertragsstaaten:
**AT DE NL SE**

(71) Anmelder: **SIEMENS-ALBIS AKTIENGESELLSCHAFT
EGA1/Verträge und Patente Postfach
CH-8047 Zürich(CH)**

(72) Erfinder: **Fischer, Hans
Letzigraben 241
CH-8047 Zürich(CH)**

(54) **Zerhackerschaltung.**

(57) Rufeinrichtungen in Fernsprechanlagen werden häufig mittels einer sinusförmigen pulsierenden Gleichspannung betätigt. Es wird eine Zerhackerschaltung angegeben, welche eine die Augenblickswerte laufend ändernde Gleichspannung erzeugt, deren Spitzenwert höher als die Speisespannung sein kann. Diese Zerhackerschaltung weist eine Induktivität (Ue) auf, die über einen ersten mit einer Diode (D1) überbrückten Schalter (S1) mit dem Eingang (E) der Zerhackerschaltung und über einen zweiten mit einer Diode (D2) überbrückten Schalter (S2) mit einem kondensator (C) verbindbar ist. Die beiden Schalter (S1, S2) sind nach dem Sperrwandlerprinzip derart gesteuert, dass der Energiefluss entweder vom Eingang (E) zum kondensator (C) oder vom kondensator (C) zum Eingang (E) erfolgen kann.

EP 0 013 332 A1

Croydon Printing Company Ltd.

- 1 -

## Zerhackerschaltung

Die vorliegende Erfindung betrifft eine Zerhackerschaltung mit Leistungsschaltern, einer Induktivität und einer Kapazität.

Für die Betätigung der Wecker in Fernsprechanlagen wird häufig eine pulsierende Gleichspannung verwendet. Diese pulsierende Gleichspannung kann durch die Ueberlagerung einer Gleichspannung mit einer sinusförmigen Wechselspannung erreicht werden, wobei an die sinusförmige Wechselspannung bezüglich Klirrfaktor gewisse Anforderungen gestellt werden können, damit das übrige Nachrichtensystem möglichst wenig durch Oberwellen gestört wird. Da die Rufspannung in den meisten Fällen relativ hoch ist, wird das Rufsignal zweckmässigerweise in einem mit kleiner Spannung arbeitenden Generator erzeugt und auf die erforderliche Rufspannung verstärkt. Bei mobilen, batteriebetriebenen Telefonanlagen wird häufig eine möglichst kompakte Bauweise und ein möglichst grosser Wirkungsgrad verlangt. Es ist bekannt, dass nach dem Zerhackerprinzip arbeitende Verstärker den höchsten Wirkungsgrad aufweisen. Durch die Entwicklung neuer elektronischer Bauteile ist es zudem möglich geworden, derartige Schaltungsanordnungen zu einem relativ günstigen Preis anzubieten. Bei Verstärkern, welche nach dem Zerhackerprinzip arbeiten, wird die Eingangsspannung mit einem schnellen Schalter zerhackt und durch einen Amplituden/Zeit-Wandler in Impulse unterschiedlicher Breite umgewandelt. Die durch Zerhacken gewonnene Rechteckspannung wird in Anwendung des Sperrwandlerprinzips mit Hilfe eines Transformators oder mit Hilfe einer Drossel umgewandelt. Die transformierte Spannung dient in der Regel dazu, ausgangsseitig einen Kondensator aufzuladen oder wieder zu entladen.

Bei bisher bekannten Schaltungen (vgl. beispielsweise DE-OS 27 14 152) erfolgt der Energiefluss von der Primärseite zur Sekundärseite eines Uebertragers über wenigstens eine andere Uebertragerwicklung als der Energiefluss von der Sekundär- zur Primärseite. Infolgedessen sind wenigstens drei Uebertragerwicklungen und drei Schalter erforderlich.

Der vorliegenden Erfindung liegt die Aufgabe zugrunde, eine Zerhackerschaltung mit einer Induktivität und einer Kapazität zu schaffen, welche bei möglichst geringen Aussenabmessungen mit einem möglichst grossen Wirkungsgrad eine die Augenblickswerte laufend ändernde Gleichspannung erzeugt, deren Spitzenwert höher als die Speisespannung sein kann.

Erfindungsgemäss wird dies dadurch erreicht, dass die Induktivität über einen ersten mit einer Diode überbrückten Schalter mit dem Eingang und über einen zweiten mit einer Diode überbrückten Schalter mit der Kapazität verbindbar ist und dass die beiden Schalter nach dem Sperrwandlerprinzip derart gesteuert sind, dass der Energiefluss entweder vom Eingang zur Kapazität oder von der Kapazität zum Eingang erfolgen kann.

Mit der Erfindung wird in vorteilhafter Weise wenigstens ein Leistungsschalter sowie eine dritte Uebertragerwicklung eingespart, wodurch eine Reduktion des Gewichtes der Anordnung und infolge des höheren Füllfaktors eine Verbesserung des Wirkungsgrades erreicht wird.

Im folgenden wird die Erfindung anhand einer Zeichnung beispielsweise näher erläutert. Es zeigen:

FIG. 1 das Blockschaltbild einer Zerhackerschaltung nach der Erfindung,

FIG. 2 ein Ausführungsbeispiel der beiden Schalter

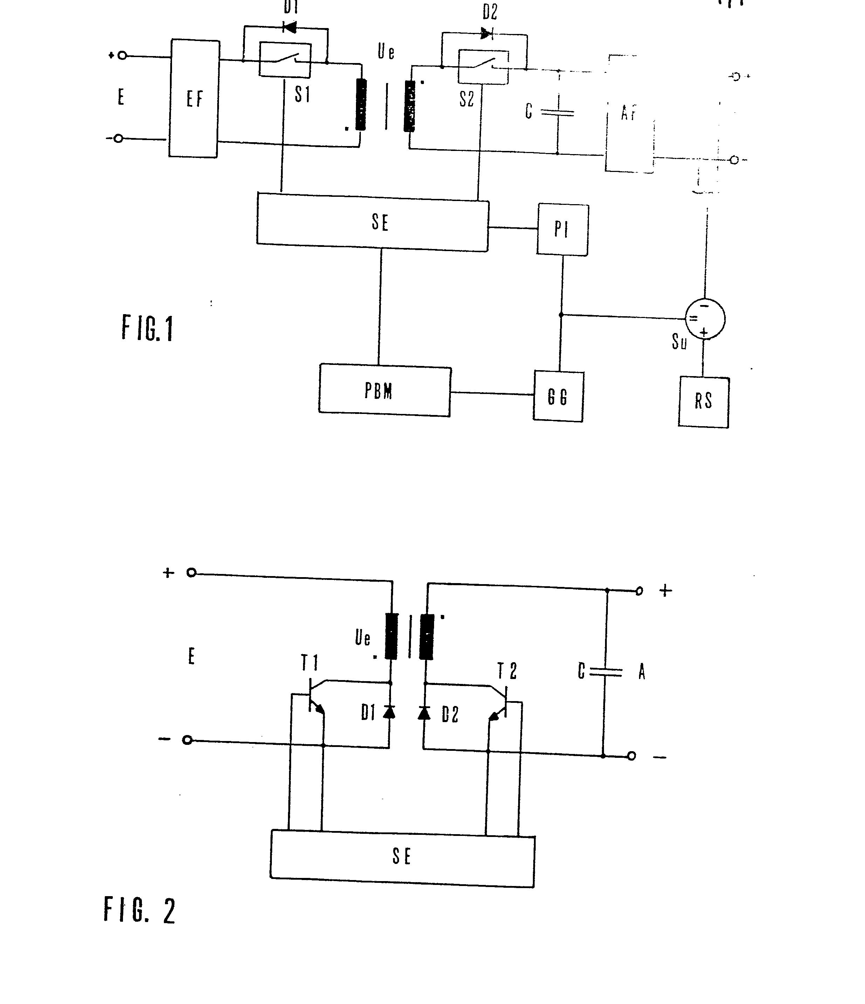

In FIG. 1 ist der Eingang E über einen mit einer Diode D1 überbrückten ersten Schalter S1 mit der Primärwicklung eines Uebertragers Ue verbunden. An der Sekundärwicklung dieses Uebertragers Ue ist über einen mit einer Diode D2 überbrückten zweiten Schalter S2 ein Kondensator C angeschlossen. Die Ausgangsklemmen sind mit dem Kondensator C verbunden. Um eine Abstrahlung von Störspannungen zu reduzieren, kann ein Ausgangsfilter AF zwischen den Kondensator C und den Ausgang A eingefügt werden. Eine Subtrahierstufe Su ist an einem Eingang mit dem Ausgang A der Schaltungsanordnung, am anderen Eingang mit einer Referenzstufe RS verbunden. Ihr Ausgang ist einerseits über einen Polaritäts-

indikator PI und andererseits über die Serieschaltung eines Gegentaktgleichrichters GG und eines Pulsbreitenmodulators PBM mit einer Steuereinheit SE verbunden. An die Steuereinheit SE sind die beiden Schalter S1 und S2 angeschlossen. Um infolge der Schaltvorgänge auftretende Störungen von einer am Eingang E angeschlossenen Spannungsquelle fernzuhalten, kann am Eingang E ein Eingangsfilter EF vorgeschaltet werden.

Die Schaltungsanordnung nach FIG. 1 funktioniert folgendermassen: Die Subtrahierstufe Su bildet die Differenz zwischen dem Istwert am Ausgang A und dem Sollwert der Referenzstufe RS. Das resultierende Differenzsignal wird über den Gegentaktgleichrichter GG dem Pulsbreitenmodulator PBM zugeführt, welcher an seinem Ausgang in einem bestimmten Schalttakt Impulse verschiedener Breite abgibt. Je grösser das Differenzsignal der Subtrahierstufe Su ist, desto breiter sind die abgegebenen Impulse. Ist das Signal am Ausgang A kleiner als das Referenzsignal, gibt der Polaritätsindikator PI ein positives Signal ab und bewirkt, dass während der vom Pulsbreitenmodulator PBM bestimmten Impuls-dauer der erste Schalter S1 geschlossen wird. Beim Oeffnen des Schalters S1 entsteht an der Primärwicklung des Uebertragers Ue ein Induktionsstoss, welcher über die Diode D2 auf den Kondensator C übertragen wird. Solange das Differenzsignal am Ausgang der Subtrahierstufe Su positiv ist, wird der Kondensator C aufgeladen. Ist die Spannung der Referenzstufe RS kleiner als diejenige am Ausgang A, gibt der Polaritätsindikator PI ein negatives Signal ab und bewirkt, dass während der vom Pulsbreitenmodulator PBM bestimmten Impulsdauer der zweite Schalter S2 geschlossen wird. Beim Oeffnen des Schalters S2 wird die im Kondensator C gespeicherte Energie über die Diode D1 auf eine am Eingang E angeschlossene Spannungsquelle übertragen. Es ist zu beachten, dass die auf die Primärseite zurückübertragene Energie nicht nur im Kondensator C gespeichert wird. Sekundärseitig können nämlich z.B. durch am Ausgang A angeschlossene Leitungen und zugehörige Teilnehmereinrichtungen verhältnismässig grosse Energiespeicher gebildet werden, insbesondere wenn mehrere Teilnehmer parallel geschaltet sind und gleichzeitig gerufen werden.

In FIG. 2 sind wesentliche Teile einer erfindungsgemässen Zerhackerschaltung mit n-p-n Transistoren als Leistungsschalter dargestellt. Dabei ist der Eingang E über die mit einer Diode D1 überbrückte Emitter-Kollektor-Strecke eines Leistungstransistors T1 mit der Primärwicklung eines Uebertragers Ue verbunden. Die Sekundärwicklung ist über die mit einer Diode D2 überbrückte Emitter-Kollektor-Strecke eines Leistungs-

0013332

transistors T2 mit einem Kondensator C verbunden, der parallel zum Ausgang A liegt. Die Basis- und Emitteranschlüsse der beiden Leistungstransistoren führen zur Steuereinheit SE. Die Funktionsweise dieser Schaltung entspricht der anhand von FIG. 1 beschriebenen.

Zum Schutz der Schalter S1 und S2 kann eine Schaltung zur Begrenzung von Ueberströmen vorgesehen werden. Dazu werden diese Ströme zweckmässigerweise nicht erst am Ausgang, sondern direkt beim jeweils gefährdeten Schalter gemessen. Die Strombegrenzungssignale können beispielsweise direkt dem Pulsbreitenmodulator PBM zugeführt werden. Um hierbei auftretende Leistungsverluste klein zu halten, werden bekannte Schutzschaltungen mit primärseitig wenig Windungen aufweisenden Uebertragern empfohlen.

Falls keine galvanische Trennung des Eingangs E vom Ausgang A erforderlich ist und die Polaritätsverkopplung vom Eingang zum Ausgang nicht stört, kann eine Drossel den Uebertrager Ue ersetzen.

Die beschriebene Zerhackerschaltung wurde in erster Linie dazu ausgelegt, einer Gleichspannung eine Wechselspannung zu überlagern. Es ist jedoch auch möglich, damit eine niederfrequente Wechselspannung beliebiger Kurvenform zu übertragen. Da jedoch mit der beschriebenen Schaltungsanordnung nicht eine Spannung wechselnder Polarität erzeugt werden kann, muss dabei am Ausgang A die Gleichspannungskomponente eliminiert werden, beispielsweise mittels eines Koppelkondensators.

16.1.1979
79/9801 EGA1/Kag

0013332

Patentansprüche

1. Zerhackerschaltung mit Leistungsschaltern, einer Induktivität und einer Kapazität, dadurch gekennzeichnet, dass die Induktivität (Ue) über einen ersten mit einer Diode (D1) überbrückten Schalter (S1) mit dem Eingang (E) und über einen zweiten mit einer Diode (D2) überbrückten Schalter (S2) mit dem Kondensator (C) verbindbar ist und dass die beiden Schalter (S1, S2) nach dem Sperrwandlerprinzip derart gesteuert sind, dass der Energiefluss entweder vom Eingang (E) zum Kondensator (C) oder vom Kondensator (C) zum Eingang (E) erfolgen kann.

2. Schaltungsanordnung nach Anspruch 1, dadurch gekennzeichnet, dass die Induktivität (Ue) ein Uebertrager ist.

3. Schaltungsanordnung nach Anspruch 1, dadurch gekennzeichnet, dass die Induktivität (Ue) eine Drossel ist.

4. Schaltungsanordnung nach Anspruch 1, dadurch gekennzeichnet, dass eine Subtrahierstufe (Su) vorgesehen ist, welche das Ausgangssignal am Kondensator (C) mit dem Signal einer Referenzstufe (RS) vergleicht und ein allenfalls resultierendes Differenzsignal einem Polaritätsindikator (PI) sowie über einen Gegentaktgleichrichter (GG) einem Pulsbreitenmodulator (PBM) zuführt, der über eine Steuereinheit (SE) mit dem gleichgerichteten Differenzsignal der Subtrahierstufe (Su) während der Dauer eines vom Pulsbreitenmodulator (PBM) abgegebenen Impulses bei positivem Differenzsignal den ersten Schalter (S1) und bei negativem Differenzsignal den zweiten Schalter (S2) schliesst.

FIG.1

FIG. 2

0013332
**Nummer der Anmeldung**
EP 79 10 4825

**Europäisches Patentamt**

## EUROPÄISCHER RECHERCHENBERICHT

| | EINSCHLÄGIGE DOKUMENTE | | | KLASSIFIKATION DER ANMELDUNG (Int.Cl.) |
|---|---|---|---|---|
| **Kategorie** | **Kennzeichnung des Dokuments mit Angabe, soweit erforderlich, der maßgeblichen Teile** | **betrifft Anspruch** | | |
| X | US - A - 3 986 097 (G.D. WOODS)<br>* Zusammenfassung; Fig. 1 *<br><br>-- | 1,2 | | H 02 M 3/335<br>H 02 M 7/757<br>H 02 P 13/18<br>H 04 M 19/02 |
| | DE - A1 - 2 655 023 (WESTERN ELECTRIC CO.)<br>* Patentanspruch 2; Seite 23, Zeile 18 bis Seite 25, 1. Absatz; Fig. 9 *<br><br>-- | 1,2 | | H 04 Q 1/30 |
| | US - A - 4 056 693 (B.S. BOSIK et al.)<br>* Zusammenfassung; Fig. 9 *<br><br>-- | 1,2 | | |
| A | DE - C3 - 2 061 150 (SIEMENS AG)<br>* gesamtes Dokument *<br><br>-- | | | **RECHERCHIERTE SACHGEBIETE (Int. Cl.)** |
| A,D | DE - A1 - 2 714 152 (SIEMENS AG)<br>* Fig. 3;<br>  Fig. 1 *<br><br>-- | 1<br>4 | | H 02 M 3/22<br>H 02 M 7/66<br>H 02 P 13/18<br>H 04 M 19/02 |
| A | FR - A1 - 2 380 666 (COMP. INTERNATIO-NALE POUR L'INFORMATIQUE CII - HONEY-WELL BULL)<br>* gesamtes Dokument *<br><br>---- | 1,4 | | H 04 Q 1/30 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| **Recherchenort** | **Abschlußdatum der Recherche** | **Prüfer** |
|---|---|---|
| Berlin | 21-04-1980 | ARENDT |

EPA form 1503.1  06.78